# EUROPÄISCHE PATENTSCHRIFT

(11) **EP 1 559 326 B1**
(45) Veröffentlichungstag und Bekanntmachung des Hinweises auf die Patenterteilung: **23.01.2008**
(21) Anmeldenummer: 05075098.3
(22) Anmeldetag: 13.01.2005
(51) Int. Cl.: A23C 19/032

(54) **Verfahren zum Zubereiten von Goudakäse, auf diese Weise erhältlicher Käse und durch Anwenden des Verfahrens gebildete Molke**
Method for preparing Gouda cheese, cheese obtained thereby and whey formed by application of the method
Procédé de préparation de fromage Gouda, fromage susceptible à être obtenu ainsi et petit lait formé lors de l'application du procédé

(30) Priorität: 28.01.2004 NL 1025342
(43) Veröffentlichungstag der Anmeldung: 03.08.2005
(73) Patentinhaber: Campina Nederland Holding B.V., 5301 LB Zaltbommel (NL)
(72) Erfinder: Penders, Johannes Antonius, 5324 AV Ammerzoden (NL); van Zon-van den Corput, Petronella Jacomijna, 5104 CV Dongen (NL)
(74) Vertreter: Bot, David Simon Maria

(56) Entgegenhaltungen:
- EP-A- 0 281 167
- EP-A- 1 133 921
- EP-A- 1 287 744
- KANAWJIA S K ET AL: "Flavour, chemical and textural profile changes in accelerated ripened Gouda cheese" LEBENSMITTEL-WISSENSCHAFT AND TECHNOLOGIE, Bd. 28, Nr. 6, 1995, Seiten 577-583, XP008035153 ISSN: 0023-6438
- DATABASE FSTA [Online] INTERNATIONAL FOOD INFORMATION SERVICE (IFIS), FRANkFURT-MAIN, DE; AWAD S ET AL: "Influence of coagulants and starter bacteria on proteolysis and sensory quality of Gouda type cheese from buffalo milk." XP002296324 Database accession no. 2000-00-p0617 & SCIENZA E TECNICA LATTIERO-CAESEARIA, Bd. 50, Nr. 6, 1999, Seiten 405-430, DEP OF DAIIRY SCI. & TECH., UNIV. OF ALEXANDRIA, EGYPT
- KANAWJIA S K ET AL: "Research in Gouda cheese technology - a review." INDIAN JOURNAL OF DAIRY SCIENCE 1991 DAIRY TECH. DIV., NAT. DAIRY RES. INST., KARNAL 132 001, INDIA, Bd. 44, Nr. 8, 1991, Seiten 485-495, XP008035132
- MARTENS R: "Gouda cheese made with microbial rennets derived from Mucor miehei." MILCHWISSENSCHAFT 1973 MIN. OF AGRIC., AGRIC. RES. ADMINISTRATION, GOVERNMENT AGRIC. RES. CENTRE, GHENT, BELGIUM, Bd. 28, Nr. 2, 1973, Seiten 87-91, XP008035167
- GIRGIS E S ET AL: "Effect of the type of starter culture on the properties of low fat Baby Edam cheese during ripening. II. Ripening progress." EGYPTIAN JOURNAL OF FOOD SCIENCE 1983 DAIRY SCI. DEP., CAIRO UNIV., CAIRO, EGYPT, Bd. 11, Nr. 1/2, 1983, Seiten 45-53, XP008035161
- BARTELS H J ET AL: "Accelerated ripening of Gouda cheese. II. Effect of freeze-shocked Lactobacillus helveticus on proteolysis and flavor development." MILCHWISSENSCHAFT 1987 DEP. OF FOOD SCI., UNIV. OF WISCONSIN-MADISON, MADISON, WISCONSIN 53706, USA, Bd. 42, Nr. 3, 1987, Seiten 139-144, XP001194846
- GOMES A M P ET AL: "INCORPORATION AND SURVIVAL OF BIFIDOBACTERIUM SP. STRAIN BO AND LACTOBACILLUS ACIDOPHILUS STRAIN KI IN A CHEESE PRODUCT" NETHERLANDS MILK AND DAIRY JOURNAL, PUDOC. WAGENINGEN, NL, Bd. 49, Nr. 2/3, Januar 1995 (1995-01), Seiten 71-95, XP000518494 ISSN: 0028-209X

## Beschreibung

Die Erfindung betrifft ein Verfahren zum Zubereiten von Käse des Goudatyps, in dem man Käsemilch mit einem geeigneten Säurewecker und anderen üblichen Materialien vermischt und der so erhaltenen Mischung mikrobielles Lab zufügt zum Erhalt von Käsebruch, der, nach den üblichen Bearbeitungen, Molkeabscheidung und Waschung, in eine gewünschte Form gebracht wird, gepresst wird, gepökelt und danach während einer gewünschten Zeit gereift wird.

Das Anwenden von mikrobiellem Lab bei der Zubereitung von Käse ist bekannt. Verwiesen wird beispielsweise auf die Produktspezifikation CesKa ®-IAse, die das Produkt Milase ® XQL-220 von CSK Food Enrichment in Leeuwarden, Niederlande, Version 04-12-03 (welche Version 07-02-03 ersetzt, Autor AvB/MH) betrifft. In der besagten Broschüre wird ein Vergleich gemacht zwischen der Wirksamkeit von Milase ® (mikrobiellem Lab) und Kalase ® (Kalbslab). Beschrieben wird, dass die Wirksamkeit dieser beiden Produkte vergleichbar ist im pH Bereich, der in der Käseherstellung verwendet wird. Angegeben wird, dass CSK für ältere Käse die Verwendung von Kalase ®, das heisst Kalbslab, empfiehlt, um das Entstehen eines bitteren abweichenden Geschmacks zu vermeiden.

Andere anwendbare mikrobielle Labe sind beispielsweise Fromase® XL und TL (DSM Food Specialties; Dairy Ingredients, Delft, NL).

Martens beschreibt in Milchwissenschaft 28 (1973) (2) 87-91 die Herstellung von Gouda mit mikrobiellem Lab.

Die vorliegende Erfindung hat die Aufgabe, das Auftreten eines bitteren abweichenden Geschmacks bei der Verwendung von mikrobiellem Lab zu vermeiden und vor allem bei der Zubereitung von älterem Käse, das heißt Käse, der älter als beispielsweise 16 Wochen ist, insbesondere Käse, der bis 24 Wochen und älter ist, zu vermeiden.

Überraschenderweise hat die Anmelderin gefunden, dass der mit der Verwendung von mikrobiellem Lab bei der Herstellung von Käse, vor allem altem Käse, des Goudatyps verbundene Nachteil eines bitteren abweichenden Geschmacks behoben werden kann, indem gemäß der Erfindung ein Säurewecker angewendet wird, der neben einem üblichen mesophile Bakterien enthaltenden Säurewecker, einen thermophile Bakterien enthaltenden Säurewecker enthält. In dieser Zubereitung kann, wie noch näher erläutert wird, die traditionelle Reifungstemperatur von Goudakäse beibehalten werden.

Thermophile Milchsäurebakterien werden häufig verwendet, um eine Beschleunigung der Reifung von Käse zu ermöglichen; die thermophilen Bakterien haben im Allgemeinen eine erhöhte proteolytische Aktivität. Deren Anwendung in Kombination mit einer erhöhten Temperatur führt zu einer schnelleren Reifung.

Es hat sich gezeigt, dass, wenn bei Anwendung von mikrobiellem Lab, Käse des Goudatyps zubereitet wird und das angewendete Lab neben üblichen mesophilen Bakterien ebenfalls thermophile Bakterien enthält, der vorher bezeichnete bittere abweichende Geschmack im Wesentlichen fehlt, sogar bei Reifungszeiträumen von sechs Monaten und länger.

An sich ist die Verwendung eines thermophile Bakterien enthaltenden Säureweckers in Kombination mit einem mikrobiellem Lab bekannt. So beschreibt Voedingsmiddelentechnologie 25 (1992) (21) 119-123 Reifungsbeschleunigung bei der Bildung von Parmesankäse unter Anwendung einer Mischung von mikrobiellen Laben zusammen mit einer neutral gezüchteten thermophilen Kultur wie beispielsweise APS₁₃ in einer Menge von 4 % bei einer Reifungstemperatur von 18 °C.

APS₁₃ (nunmehr C97.1) (Nizostar APS von CSK Food Enrichment, Leeuwarden, NL) ist eine Mischkultur aus *Streptococcus thermophilus, Lactobacillus helveticus und Lactobacillus acidophilus.*

Im besagten Teil des Artikels wird die Bildung von Käse des Goudatyps unter Anwendung von mikrobiellem Lab in Kombination mit einem mesophile Bakterien enthaltenden Säurewecker und einem thermophile Bakterien enthaltenden Säurewecker nicht beschrieben. Im selben Artikel wird übrigens ebenfalls die Bildung von Käse des Goudatyps beschrieben, in dem Kalbslab in Kombination mit einem Säurewecker angewendet wird, der einerseits das vorher genannte APS enthält sowie einen Säurewecker BOS *(Lactococcus lactic* subsp. *lactis* und *Lactococcus lactis* subsp. *cremoris* als säurebildende Bakterien und zitratverwendende Stämme *Lactococcus lactis* subsp. *lactis biovar diacetylactis* und *Leuconostoc mesenteroides* subsp. *cremoris).* Das Anwenden eines mikrobiellen Labs im Zusammenhang mit einem solchen APS und BOS enthaltenden Kombinationslabs wird dort nicht beschrieben.

Weiters wird auf NL-C-1018856 verwiesen, worin die Zubereitung von foliengereiftem Käse des harten oder halbharten Typs, insbesondere des Gouda- oder Edamertyps beschrieben wird, wobei zur Verbesserung des Geschmacks neben einem üblichen mesophilen Säurewecker beispielsweise dem Typ BOS ein stellvertretender Säurewecker angewendet wird (in nichtkonzentrierter Form in einer Menge von 0,2-5 Gew%, vorzugsweise 0,5-2 Gew%), der thermophile Bakterien enthält.

Das in dieser Veröffentlichung angewendete Lab ist jedoch ein Kalbslab und es wird nicht auf das eventuelle Entstehen eines bitteren abweichenden Geschmacks als Folge der Anwendung eines mikrobiellen Labs eingegangen.

Kanawjia et al. (Lebensmittel-Wissenschaft und Technologie, 28, 577-583 [1995]) beschreibt ein Verfahren zum Zubereiten von Goudakäse aus Büffelmilch unter Verwendung einer für Joghurt üblichen thermophilen CH9 Starterkultur mit hitzebehandelten Zellen von *Lactobacillus helveticus.* Der Artikel beschreibt nicht die kombinierte Verwendung eines mesophilen und eines thermophilen Säureweckers. Die vorliegende Erfindung geht gerade von nicht mit Hitze behandeltem, das heisst unbehandelte thermophile Bakterien enthaltendem Säurewecker, vorzugsweise besagte *Lactobacillus* enthaltend, vorzugsweise *Lactobacillus helveticus,* aus. Weiter geht Kanawjia et al von Büffelmilch aus, die eine ganz andere Zusammensetzung hat und daher zu einem wesentlich anderen Ergebnis führen wird. Die vorliegende Erfindung wird vorzugsweise auf Kuhmilch angewendet, obwohl andere Sorten Milch, wie Ziege, nicht im Voraus auszuschließen sind und einen weiteren Aspekt der Erfindung bilden.

Insbesondere umfasst der im Verfahren gemäß der Erfindung thermophile Bakterien enthaltende Säurewecker eine oder mehrere Sorten von Bakterien gewählt aus der Gruppe der *Lactobacillus acidophilus* oder *Lactobacillus helveticus* eventuell in Kombination mit *Streptococcus thermophilus,* obwohl dem Fachmann viele andere in diesem Zusammenhang anwendbare Bakteriensorten vor Augen stehen werden. Selbstverständlich können auch Mischungen aus zwei oder mehreren verschiedenen Säureweckern, die thermophile Bakterien umfassen, angewendet werden.

Zweckmäßig umfasst der thermophile Bakterien enthaltende Säurewecker mindestens Bakterien der Sorte *Lactobacillus helveticus.* Anwendbare im Handel erhältliche Produkte werden beispielsweise von LH-B01 gebildet, (Chr Hansen (DK), Spezifikation Oktober 2001; APS₁₃ (nunmehr C97.1) (APS NIZOSTAR von CSK Food Enrichment); LB 40 *(Lactobacillus helveticus; CBS 114075)* der Anmelderin und vielen anderen.

Es hat sich gezeigt, dass äußerst geringe Mengen thermophile Bakterien enthaltende Säurewecker in der Lage sind, um den bitteren abweichenden Geschmack infolge der Anwendung von mikrobiellem Lab zu vermeiden.

So wird zweckmäßig der thermophile Bakterien enthaltende Säurewecker in Konzentratform in einer Menge von 0,0010 bis 0,0100 % bezogen auf das Volumen der Käsemilch bei einer Menge üblichen mesophile Bakterien enthaltenden Säureweckers (wie BOS) zwischen 0,2 und 1,0 % bezogen auf das Volumen der Käsemilch, verwendet.

Insbesondere wendet man eine Menge thermophile Bakterien enthaltenden Säurewecker in Konzentratform zwischen 0,0025 und 0,0075 % an, vorzugsweise zwischen 0,0040 und 0,0050 % bezogen auf das Volumen der Käsemilch und mehr bevorzugt etwa 0,0042 % thermophile Bakterien enthaltenden Säurewecker in Konzentratform bezogen auf das Volumen der Käsemilch und etwa 0,5 % eines mesophile Bakterien enthaltenden Säureweckers bezogen auf das Volumen der Käsemilch. Wie vorher angegeben, wird der thermophile Bakterien enthaltende Säurewecker in Konzentratform angewendet, das heisst in der Form wie vom Hersteller geliefert wurde.

Selbstverständlich kann der thermophile Bakterien enthaltende Säurewecker auch in gezüchteter Form angewendet werden, die zubereitet wird, indem man von einer Konzentratform ausgeht.

Für Säurewecker wie APS₁₃ (NIZOSTAR APS; CSK Food Enrichment) wird bei 37 °C während 40 Stunden in einer Dosierung von 125 g APS₁₃ Konzentrat pro 1250 l Säureweckermilch gezüchtet. Nach dem Züchten wird neutralisiert und gerührt und ist die Kultur zum Gebrauch bereit.

Für das LB-40 der Anmelderin wird in einer hochpasteurisierten Untermilch bei 42 °C während 13 Stunden in einer Dosierung von 125 g Konzentrat pro 1250 l Säureweckermilch gezüchtet.

Die Mengen im Verfahren gemäß der Erfindung zu verwendender thermophile Bakterien enthaltender Säurewecker in gezüchteter Form beträgt im Allgemeinen 0,05-1,0 % bezogen auf das Volumen der Käsemilch; und vorzugsweise 0,2 % bezogen auf das Volumen der Käsemilch.

In einer attraktiven Ausführungsweise der vorliegenden Verfahren zum Zubereiten von Käse des Goudatyps kann vorteilhaft einerseits eine Reifung an der Luft bei einer Temperatur zwischen 12 und 15 °C während eines Zeitraums länger als 16 Wochen bis länger als 6 Monate stattfinden. Ein solcher Käse wird allgemein als ein naturgereifter Käse bezeichnet.

Andererseits kann der Käse während des Reifens in einer üblichen Folie verpackt sein, während die Reifung vorteilhaft bei einer Temperatur zwischen 5 und 15 °C während eines Zeitraums länger als 16 Wochen bis länger als 6 Monate stattfindet. Ein solcher Käse wird foliengereifter Käse genannt, der im Gegensatz zu naturgereiftem Käse, keine durch Austrocknung und durch Anbringen einer Kunststoffbeschichtung gebildete Kruste aufweist.

Angemerkt wird hier, dass die Reifungstemperatur von 12-15 °C bzw. 5-15 °C relativ niedrig ist, die Anwesenheit eines thermophilen Bakterien enthaltenden Säureweckers in Betracht ziehend.

Überraschenderweise hat sich gezeigt, dass die Auswirkung der Erfindung, das Vermeiden eines bitteren abweichenden Geschmacks unter Anwenden von mikrobiellem Lab und langer Reifungszeit, bei Temperaturen auftritt, die häufig bei der Verwendung von ausschließlich mesophile Bakterien enthaltendem Säurewecker angewendet werden. Bei Anwesenheit von thermophilen Bakterien enthaltenden Säureweckern werden häufig höhere Reifungstemperaturen angewendet, wie beispielsweise 18 °C, um eine schnelle Reifung zu erzielen.

Die Erfindung betrifft ebenfalls einen Käse, erhältlich durch Anwenden des Verfahrens gemäß der vorher beschriebenen Erfindung, die bei Reifung während eines Zeitraums länger als 16 Wochen bis länger als 6 Monate frei von einem bitteren Geschmack ist. Die Erfindung betrifft ebenfalls Molke, die erhältlich ist durch das Ausführen des vorher beschriebenen Käsezubereitungsverfahrens. Nach der Bildung des Bruchs wird die zurückbleibende Molke für weitere Anwendung abgeschieden, beispielsweise in Nahrungsmitteln. Da das Verfahren gemäß der Erfindung mikrobielles Lab und kein Kalbslab anwendet, besteht für den Menschen keine Gefahr einer eventuellen Ansteckung mit Rindern in Zusammenhang gebrachter Viehkrankheiten wie BSE und gilt für die Molke (wie ebenfalls selbstverständlich für den erhaltenen Käse) eine "Kosher"- und "Halal"-Akzeptanz.

Vor allem in Gebieten mit einer zentralisierten Molkeverarbeitung, wobei Molke von verschiedenen Käsefabriken mit ihrem jeweils eigenen Käsetype zugeführt wird, ist der oben beschriebene Aspekt wichtig.

Die Erfindung wird nun anhand eines Beispiels beschrieben, in dem Goudakäse auf übliche Weise zubereitet wird.

BOS wird während 16-18 Stunden bei 21 °C in hochpasteurisierter Untermilchmilch gezüchtet (gemäß Spezifikation CSK Food Enrichment).

Als thermophile Bakterien enthaltendes Lab wurde LH-B01 von Chr. Hansen DK in Konzentratform angewendet, d.h. in der Form, wie vom Hersteller geliefert. 12.000 Liter Käsemilch (mindestens 15 Sekunden bei 72 °C pasteurisiert) und mit einem Fettgehalt entsprechend dem Protokoll für Goudakäse 48+ (Fett/Eiweiss Verhältnis 1,02) wurde mit 1200 ml Fromase ® XL von DSM Food Specialties, Dairy Ingredients, Delft, Niederlande, sowie 0,5 %, bezogen auf das Volumen der Käsemilch, gezüchtetem BOS Starter wie vorher angegeben und 0,5 l (0,0042 %) LH-B01 (Chr. Hansen DK) als thermophile Bakterien enthaltendem Säurewecker in Konzentratform, vermischt.

Derselbe Versuch wurde durchgeführt, wobei jedoch der thermophile Bakterien enthaltende Säurewecker LH-B01 weggelassen wurde.

Der Käse wurde auf übliche Weise zubereitet, nach Abscheiden der Molke wurde der Bruch gewaschen, in Käsefässer gegeben und gepresst; gepökelt auf übliche Weise und wonach man den Käse reifen ließ. Der Käse wurde auf übliche Weise bei 13,5 °C gereift und als der Käse ein Alter von 38 Wochen hatte, wurden die Zusammensetzung und Geschmacksproben durchgeführt.

Die Ergebnisse sind in untenstehender Tabelle dargestellt.

| | Test 1 (ohne thermophile Bakterien enthaltenden Säurewecker) | Test 2 (mit thermophile Bakterien enthaltendem Säurewecker LH B01) |
|---|---|---|
| Alanin g/kg | 1,1 | 1,6 |
| Glycin g/kg | 1,0 | 1,8 |
| Prolin g/kg | 1,2 | 2,9 |
| 3-Ethyl-2,5-Dimethylpyrazin* | 0,1 | 0,2 |
| 2,3,5-Trimethyl-6-Ethylpyrazin* | 0,2 | 0,6 |

| | | |
|---|---|---|
| *Relative Spitzenflächen. Die Bestimmung der Pyrazine wird durchgeführt unter Anwendung eines dynamischen Head-space in Kombination mit Gaschromatographie und spezieller MS Detektion. Die Bestimmung freier Aminosäuren in Käse mittels Gaschromatographie wurde mit einer modizifierten EZ:Faast ™GC Methode durchgeführt. Dazu wurde 1 Gramm Käse mit 24 ml 2 % Natriumzitrat bei 45 °C während 5 Min. in einem Stomacher gemischt. Die Suspension wurde 10 Min. bei 5000 Upm zentrifugiert und von der wässrigen Lösung wurde anschließend 25 µl in Bearbeitung genommen. Diese Lösung wurde als Ausgangslösung für die EZ:faast™ GC Methode verwendet und lieferte die angegebenen Werte. | | |

Hinsichtlich des Geschmacks wurde außer auf den Gesamtgeschmack speziell auf süß, bitter und schwer geachtet.

| | Ohne thermophile Bakterien enthaltenden Säurewecker | Mit thermophile Bakterien enthaltendem Säurewecker |
|---|---|---|
| Gesamtgeschmack | 5,8 | 6,3 |
| Süß | 2x | 8x |
| Bitter | 11x | 3x |
| Schwer | 0x | 1x |

In den oben beschriebenen Geschmacksproben betrug die Anzahl individueller Prüfungen 24.

Wie sich aus den obenstehenden Proben zeigt, ist eine deutliche Zunahme von einen süßen Geschmacks einführenden Aminosäuren wie Alanin, Glycin und Prolin sowie von einen Bouillongeschmack einführendem Pyrazin, vor allem 2,3,5-Trimethyl, 6-Ethylpyrazin und 3-Ethyl-2,5-Dimethylpyrazin, wahrnehmbar.

Hinsichtlich des Gesamtgeschmacks gibt es eine Verbesserung von 5,8 zu 6,3: (etwas) süß wurde bei dem Käse gemäß der Erfindung in acht Fällen angegeben und nur bei zwei Fällen in einem üblichen mit mikrobiellem Lab zubereiteten Käse. Hinsichtlich bitter hat ein traditioneller mit mikrobiellem Lab zubereiteter Käse in elf Fällen eine Bezeichnung bitter, während der Käse gemäß der Erfindung dies nur in drei Fällen hat.

Hinsichtlich schwer ist in traditionell mit mikrobiellem Lab zubereitetem Goudakäse in keinem einzigen Fall eine solche Qualifikation gegeben, während bei Käse gemäß der Erfindung einmal eine solche Qualifikation gegeben wurde.

Aus diesen Wahrnehmungen zeigt sich, dass in dem Käse gemäß der Erfindung vor allem hinsichtlich des Auftretens eines bitteren abweichenden Geschmacks eine wichtige Verbesserung zustande gebracht wurde, während der (etwas) süße Charakter des Käses gemäß der Erfindung mehr ausgeprägt ist als bei dem traditionell mittels mikrobiellem Lab hergestelltem Käse.

Hinsichtlich des Gesamtgeschmacks hat der mit mikrobiellem Lab, mesophile Bakterien enthaltendem Säurewecker und thermophile Bakterien enthaltendem Säurewecker zubereitete Käse gemäß der Erfindung eine deutlich bessere Benotung als mit mikrobiellem Lab und einem mesophile Bakterien enthaltendem Säurewecker zubereiteter Käse, wobei ergänzend kein thermophile Bakterien enthaltender Säurewecker angewendet wurde.

## Patentansprüche

1. Verfahren zum Zubereiten von Käse des Goudatyps, in dem man Käsemilch mit einem geeigneten Säurewecker und anderen üblichen Materialien vermischt und der so erhaltenen Mischung mikrobielles Lab zufügt zum Erhalt von Käsebruch, der, nach den üblichen Bearbeitungen, Molkeabscheidung und Waschung, in eine gewünschte Form gebracht wird, gepresst wird, gepökelt und danach während einer gewünschten Zeit gereift wird, **dadurch gekennzeichnet, dass** der angewendete Säurewecker, neben einem üblichen mesophile Bakterien enthaltenden Säurewecker, einen thermophile Bakterien enthaltenden Säurewecker umfasst.

2. Verfahren nach Anspruch 1, **dadurch gekennzeichnet, dass** der thermophile Bakterien enthaltende Säurewecker eine oder mehrere Sorten Bakterien umfasst, gewählt aus *Lactobacillus acidophilus* oder *Lactobacillus helveticus* wohl oder nicht in Kombination mit *Streptococcus thermophilus.*

3. Verfahren nach Anspruch 2, **dadurch gekennzeichnet, dass** der thermophile Bakterien enthaltende Säurewecker mindestens Bakterien der Sorte *Lactobacillus helveticus* umfasst.

4. Verfahren nach einem oder mehreren der Ansprüche 1 bis 3, **dadurch gekennzeichnet, dass** der thermophile Bakterien enthaltende Säurewecker in Konzentratform in einer Menge zwischen 0,0010 und 0,0100 % bezogen auf das Volumen der Käsemilch bei einer Menge üblichen mesophile Bakterien enthaltenden Säureweckers zwischen 0,2 und 1,0 % bezogen auf das Volumen der Käsemilch, zugefügt wird.

5. Verfahren nach Anspruch 4, **dadurch gekennzeichnet, dass** der thermophile Bakterien enthaltende Säurewecker in Konzentratform in einer Menge zwischen 0,0025 und 0,0075 % bezogen auf das Volumen der Käsemilch, vorzugsweise einer Menge zwischen 0,0040 und 0,0050 % und mehr bevorzugt etwa 0,0042 % thermophile Bakterien enthaltenden Säureweckers bezogen auf das Volumen der Käsemilch bei einer Menge mesophiler Bakterien enthaltenden Säureweckers von etwa 0,5 % bezogen auf das Volumen der Käsemilch, zugefügt wird.

6. Verfahren nach einem oder mehreren der vorhergehenden Ansprüche 1 bis 5, **dadurch gekennzeichnet, dass** die Reifung an der Luft bei einer Temperatur zwischen 12 und 15 °C während eines Zeitraums länger als 16 Wochen bis länger als 6 Monate stattfindet.

7. Verfahren nach einem oder mehreren der vorhergehenden Ansprüche 1 bis 5, **dadurch gekennzeichnet, dass** der Käse während des Reifens in einer üblichen Folie verpackt ist und die Reifung an der Luft bei einer Temperatur zwischen 5 und 15 °C während eines Zeitraums länger als 16 Wochen bis länger als 6 Monate stattfindet.

8. Käse erhältlich durch Anwenden des Verfahrens nach einem oder mehreren der Ansprüche 1 bis 7, die bei Reifung während eines Zeitraums länger als 16 Wochen bis länger als 6 Monate im Wesentlichen frei von einem bitteren Geschmack ist.

9. Molke erhältlich als Nebenprodukt, das nach der Bruchbildung durch Anwenden des Verfahrens nach einem oder mehreren der Ansprüche 1 bis 7 abgeschieden wird.

## Claims

1. A method for preparing cheese of the Gouda type, wherein cheese milk is mixed with a suitable lactic starter and other customary materials, and microbial rennet is added to the mixture thus obtained in order to obtain curd which, after the customary processing, whey separation and washing, is placed into a desired mould, pressed, salted and, afterwards, ripened over a desired period of time, **characterized in that** the lactic starter used comprises, besides a customary lactic starter containing mesophilic bacteria, a lactic starter containing thermophilic bacteria.

2. A method according to claim 1, **characterized in that** the lactic starter containing thermophilic bacteria comprises one or more species of bacteria selected from *Lactobacillus acidophilus* or *Lactobacillus helveticus,* optionally in combination with *Streptococcus thermophilus.*

3. A method according to claim 2, **characterized in that** the lactic starter containing thermophilic bacteria comprises at least bacteria of the species *Lactobacillus helveticus.*

4. A method according to one or more of claims 1 to 3, **characterized in that** the lactic starter containing thermophilic bacteria is added in concentrate form in an amount of between 0.0010 and 0.0100 %, based on the volume of cheese milk, with an amount of customary lactic starter containing mesophilic bacteria of between 0.2 and 1.0 %, based on the volume of cheese milk.

5. A method according to claim 4, **characterized in that** the lactic starter in concentrate form containing thermophilic bacteria is added in an amount of between 0.0025 and 0.0075 %, based on the volume of cheese milk, preferably in an amount of between 0.0040 and 0.0050 %, and more preferably about 0.0042 % of lactic starter containing thermophilic bacteria, based on the volume of cheese milk, with an amount of lactic starter containing mesophilic bacteria of about 0.5 %, based on the volume of cheese milk.

6. A method according to one or more of the previous claims 1 to 5, **characterized in that** the ripening takes place in air at a temperature between 12 and 15 °C over a period of time longer than 16 weeks to longer than 6 months.

7. A method according to one or more of the previous claims 1 to 5, **characterized in that** the cheese is packaged in a customary film during ripening and the ripening takes place in air at a temperature between 5 and 15 °C over a period of time of longer than 16 weeks to longer than 6 months.

8. Cheese obtainable by application of the method according to one or more of claims 1 to 7 that, when ripened over a period of time longer than 16 weeks to longer than 6 months, is essentially free of a bitter taste.

9. Whey obtainable as side product that, after curd formation, is separated using the method according to one or more of claims 1 to 7.

## Revendications

1. Procédé de préparation de fromage de type Gouda, dans lequel on mélange du lait fromager avec un levain lactique approprié et d'autres produits habituels et on rajoute au mélange ainsi obtenu de la présure microbienne pour obtenir un caillé qui, après les traitements usuels, retrait du petit lait et lavage, est amené à la forme souhaitée, est pressé, saumuré et mûrit ensuite pendant un certain temps, **caractérisé en ce que** le levain lactique utilisé, outre un levain lactique contenant des bactéries mésophiles usuelles, contient un levain lactique contenant des bactéries thermophiles.

2. Procédé selon la revendication 1, **caractérisé en ce que** le levain lactique contenant des bactéries thermophiles comprend une ou plusieurs sortes de bactéries, sélectionnées parmi le *Lactobacillus acidophilus* ou le *Lactobacillus helveticus,* combinées ou non avec du *Streptococcus thermophilus.*

3. Procédé selon la revendication 2, **caractérisé en ce que** le levain lactique contenant des bactéries thermophiles comprend au moins des bactéries de la variété *Lactobacillus helveticus.*

4. Procédé selon une ou plusieurs des revendications 1 à 3, **caractérisé en ce que** le levain lactique contenant des bactéries thermophiles est rajouté sous forme de concentré en une quantité allant de 0,0010 à 0,0100 % par rapport au volume de lait fromager avec une quantité de levain lactique contenant des bactéries mésophiles usuelles allant de 0,2 à 1,0 % par rapport au volume du lait fromager.

5. Procédé selon la revendication 4, **caractérisé en ce que** le levain lactique contenant des bactéries thermophiles est rajouté sous forme de concentré en une quantité allant de 0,0025 à 0,0075 par rapport au volume du lait fromager, de préférence une quantité allant de 0,0040 à 0,0050 et de manière plus préférentielle d'environ 0,0042 % de levain lactique contenant des bactéries thermophiles par rapport au volume du lait fromager pour une quantité de levain lactique contenant des bactéries mésophiles usuelles d'environ 0,5 % par rapport au volume du lait fromager.

6. Procédé selon une ou plusieurs des revendications précédentes 1 à 5, **caractérisé en ce que** le mûrissement a lieu à l'air à une température allant de 12 à 15 °C pendant une durée comprise entre plus de 16 semaines et plus de 6 mois.

7. Procédé selon une ou plusieurs des revendications précédentes 1 à 5, **caractérisé en ce que** le fromage est emballé pendant le mûrissement dans un film usuel et que le mûrissement a lieu à l'air à une température allant de 5 à 15°C pendant une durée comprise entre plus de 16 semaines et plus de 6 mois.

8. Fromage pouvant être obtenu par application du procédé selon une ou plusieurs des revendications 1 à 7 qui, avec un mûrissement pendant une durée comprise entre plus de 16 semaines et plus de 6 mois, ne présente sensiblement pas de goût amer.

9. Petit lait pouvant être obtenu en sous-produit, qui est isolé après le caillage en appliquant le procédé selon une ou plusieurs des revendications 1 à 7.
